(19) Europäisches Patentamt
European Patent Office
Office européen des brevets

(11) **EP 3 652 043 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(21) Anmeldenummer: **18743720.7**

(22) Anmeldetag: **12.07.2018**

(51) Int Cl.:
**B62D 7/14** *(2006.01)*  **B62D 7/15** *(2006.01)*

(86) Internationale Anmeldenummer:
**PCT/EP2018/069019**

(87) Internationale Veröffentlichungsnummer:
**WO 2019/012073 (17.01.2019 Gazette 2019/03)**

(54) **VERFAHREN ZUR BEIBEHALTUNG DER SPUR EINES ZWEISPURIGEN FAHRZEUGS**

METHOD FOR MAINTAINING THE TRACK OF A TWO-TRACK VEHICLE

PROCÉDÉ PERMETTANT DE MAINTENIR LA VOIE D'UN VÉHICULE À DEUX VOIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.07.2017 DE 102017115814**
**11.12.2017 DE 102017129485**

(43) Veröffentlichungstag der Anmeldung:
**20.05.2020 Patentblatt 2020/21**

(73) Patentinhaber:
• **Meissner, Rolf, Dr.**
**50996 Köln (DE)**
• **Meissner, Ute Marita**
**50996 Köln (DE)**

(72) Erfinder:
• **Meissner, Rolf, Dr.**
**50996 Köln (DE)**
• **Meissner, Ute Marita**
**50996 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**EP-A1- 0 484 668    EP-A1- 1 449 745**
**EP-A2- 0 308 263    WO-A1-2009/019444**
**DE-A1- 3 929 994    JP-A- S63 149 265**
**US-A- 5 799 259**

**Beschreibung**

Die Erfindung betrifft ein Verfahren zur Beibehaltung der Spur eines zweispurigen Fahrzeugs mit einer lenkbaren Vorderachse und mit einer oder mehreren in unterschiedlichen Achsabständen zu der Vorderachse angeordneten weiteren lenkbaren Achsen, insbesondere lenkbaren Hinterachsen.

Allgemeines

Die Entwicklung von Systemen zum teilautonomen und vollautonomen Fahren wird von vielen Pkw- und Lkw-Herstellern und deren Zulieferern mit großem Aufwand vorangetrieben. Inzwischen stehen den Entwicklern ausgereifte Technologien zur Erkennung der Fahrzeugbewegung, der Stabilität des Fahrzustandes, Erkennung des Fahrzeugumfeldes und zur elektronischen Steuerung und Lenkung des Fahrzeuges zur Verfügung die sich für die unterschiedlichsten Fahrerassistenzsysteme einsetzen lassen.

Die Erfindung betrifft ein Verfahren für ein elektronisches Spurführungssystem, mit dem sich diejenige Achse oder Achsen eines zweispurigen Fahrzeugs oder Gespanns, die in Fahrtrichtung betrachtet hinter der ersten, heute vom Fahrer (und in Zukunft u.U. autonom) gelenkten Achse angeordnet ist bzw. sind, automatisch so lenken lassen, dass die Räder der nachfolgenden Achse oder der nachfolgenden Achsen der Spur der Räder der ersten Achse folgen.

Hintergrund

In engen Kurven benötigen viele Lkw und Busse oft deutlich mehr Platz als die auf der Straße markierte Spur. Sie gefährden damit den Gegenverkehr.

Beobachtet man beispielsweise einen Bus im Gebirge, der eine Serpentine hinauf oder hinab fährt, so stellt man fest, dass in den Kurven zwar die Vorderräder gelenkt durch den Fahrer der auf der Straße markierten Spur folgen, die Spur der Hinterräder aber konstruktionsbedingt von der Spur der Vorderachse abweicht und dabei die Kurve schneidet.

Für den Gegenverkehr entsteht dadurch, dass das Heck des Busses die Kurve schneidet, eine Gefahr, weil die eigene Spur vom entgegenkommenden Bus deutlich verengt wird.

Zur Reduzierung dieser Gefahr ist bei Bussen häufig die Hinterachse konstruktiv in Längsrichtung ein Stück nach vorne verschoben, was zu einem kürzeren Radstand und damit zu einer Verringerung des Ausmaßes des "Kurvenschneidens", aber auch zu einem längeren Fahrzeugüberhang hinten führt. Das in einem größeren Ausmaß über die Hinterachse überhängende Heck kann bei Kurvenfahrt mit Teilen der Infrastruktur (Haltestellen, Masten) oder sogar mit anderen Fahrzeugen oder Personen kollidieren.

Stand der Technik

Ein sinnvoller Ansatz zur Verbesserung der Spurbeihaltung eines Fahrzeugs auf der Straße ist der Einsatz eines Systems zur Hinterradlenkung.

EP-A-0308263 beschreibt eine Lenksteuerung der Hinterachse auf Basis des von der Hinterachse zurückgelegten Weges. Auf Seite 3 dieser Druckschrift sind zwei Formeln angegeben, die ganz eindeutig den "Wegbezug" des bekannten Verfahrens zeigen.

Gleichung (1) beschreibt Fahrzeug-Lenkwinkel vorne und hinten, und zwar jeweils relativ zur Erde in absoluten erdfesten Koordinaten als Addition von Gierwinkel und Lenkwinkel relativ zum Fahrzeug. Gleichung (2) ist die Auflösung der Gleichung (1) nach $\delta r(i)$. Nach dieser Druckschrift ist ferner entlang der "trajectory 4" des Vorderrades 2 ein Koordinatensystem definiert, das die "travel distance" i als Variable nutzt (siehe Seite 4, Zeilen 42 und 43). Schließlich verfügt nach dem bekannten Konzept jedes der vier Räder über einen Radsensor, der proportional zur "rotational speed" des Rades (siehe Seite 4, Zeile 6) Impulse abgibt. Werden z.B. pro Radumdrehung 20 Impulse abgegeben, so wird bei einem Radumfang von z.B. 200 cm jeweils nach einem Abrollweg von 10 cm ein weiterer Impuls ausgelöst. Die Impulse werden hochgezählt und die so generierte Variable i gibt die Anzahl der Wegdistanzen (von z.B. 10 cm Länge) an, die dieses Rad bereits gerollt ist. Die Variable i ist demnach eine Längenangabe des Rollweges des Rades entlang der Wegstrecke dieses Rades "trajectory" in quantisierter Form.

In DE-T-690 05 148 ist ein System zur Hinterradlenkungssteuerung beschrieben, das zum Ziel hat, unter Hinzuziehung eines Modells mit drei Freiheitsgraden (Gierung, Querbeschleunigung, Aufhängungslenkung) die Gierdämpfung und das Lenk- und Wendeverhalten des Fahrzeugs zu optimieren.

DE-A-34 46 881 beschreibt ein Lenksystem, bei dem die Hinterräder in Relation zu einer Lenkoperation der Vorderräder gelenkt werden. Eine Verhältnissteuerung stellt das Lenkwinkelverhältnis des Hinterrades zum Vorderrad abhängig von der Fahrgeschwindigkeit ein. Das Lenkwinkelverhältnis kann positive wie negative Werte annehmen (gleichphasig/gegenphasig). Außerdem gibt eine Modenauswahlsteuerung dem Fahrer die Möglichkeit, während der Fahrt zwischen unterschiedlichen Steuermoden manuell auszuwählen. Die Eigenschaft dieses Lenksystems ist, dass bei niedrigen Fahrgeschwindigkeiten sowohl der minimale Kurven- oder Wenderadius des Fahrzeugs als auch die innenseitige Radspannweite beträchtlich reduziert werden. So wird nicht nur die Fahrdynamik optimiert, sondern auch die Fahrspur auf der Straße besser ausgenutzt.

Die beiden zuvor genannten Schriften betreffen Systeme zur Hinterradlenkung, deren Einsatz bewirken kann, dass das Fahrzeug die Fahrspur auf der Straße besser einhält. Sie beschreiben aber kein System zur Hinterradlenkung, das die Hinterräder so lenkt, dass diese der Spur der Vorderräder genau folgen.

In US-A-4,770,265 ist ein Lenksystem für ein zweispuriges Fahrzeug beschrieben, das den Lenkwinkel der Räder der Vorderachse relativ zur Fahrzeug-Längsachse erfasst und speichert und die Räder der Hinterachse relativ zur Fahrzeug-Längsachse in Abhängigkeit vom Lenkwinkel der Räder der Vorderachse und einer Verzögerungszeit mit einem Aktuator lenkt. Dieses bekannte System stellt also den Lenkwinkel an der Hinterachse in Abhängigkeit vom Lenkwinkel an der Vorderachse nach einer Zeitspanne ein.

In DE-A-10 2006 037 588 ist ein Verfahren zur Einstellung aller Lenkwinkel einer automatischen oder teilautomatischen spurtreuen Mehrachslenkung eines Straßenfahrzeugs mit zwei oder mehr Achsen beschrieben. Nach dem beschriebenen Verfahren werden alle Lenkachswinkel des Fahrzeugs automatisch so eingestellt, dass die Bewegungsrichtungen der Lenkachsmittelpunkte tangential zu einer vorgegebenen Sollwegtrajektorie (Sollwegverlauf des Fahrzeugs) ausgerichtet werden.

In DE-T-603 19 896 ist ein Verfahren zur spurtreuen Nachführung der Räder eines Anhängers eines Gespanns beschrieben. Der Anhänger ist dazu mit einem Mittel (Messvorrichtung) ausgestattet das dazu bestimmt ist, die von der Zugmaschine eingeschlagene Bahn zu erfassen. Abhängig z.B. vom gemessenen Winkel zwischen Längsachse des Zugfahrzeugs und Längsachse des Anhängers wird der Lenkwinkel der Räder des Anhängers zeitversetzt von einem Hydraulikzylinder so ausgerichtet, dass der Anhänger der Spur des Zugfahrzeugs folgt.

Erfindung

Aufgabe der Erfindung ist es, das Ausmaß des Kurvenschneidens bei mehrachsigen zweispurigen Fahrzeugen zu verringern.

Die Lösung der Aufgabe erfolgt mittels eines Verfahrens zur Beibehaltung der Spur eines zweispurigen Fahrzeugs mit einer lenkbaren Vorderachse und mit einer oder mehreren in unterschiedlichen Achsabständen zu der Vorderachse angeordneten weiteren lenkbaren Achsen, insbesondere Hinterachsen, wobei bei dem Verfahren kontinuierlich

- der Lenkwinkel der Vorderachse über die Zeit erfasst und gespeichert wird,
- der sich während der Fahrt ändernde Gierwinkel des Fahrzeugs relativ zur Erde über die Zeit erfasst und gespeichert wird,
- die Fahrzeuggeschwindigkeit erfasst und ggf. gespeichert wird,
- für jede weitere lenkbare Achse aus der Fahrzeuggeschwindigkeit und dem Abstand der betreffenden weiteren lenkbaren Achse von der Vorderachse eine Zeitspanne errechnet wird, und zwar nach der Formel

$$t_n = l_n/v(t), \qquad\qquad\qquad (1)$$

für n = 1,2,...,N (Anzahl der weiteren lenkbaren Achsen),
- für jede weitere lenkbare Achse die Veränderung des Gierwinkels des Fahrzeugs innerhalb der der betreffenden weiteren lenkbaren Achse zugeordneten Zeitspanne, d.h. die Veränderung $\Psi(t) + \Psi(t- t_n)$ des Gierwinkels ermittelt wird,
- der Lenkwinkel jeder weiteren lenkbaren Achse kontinuierlich aus dem Lenkwinkel der Vorderachse nach Ablauf der der betreffenden weiteren lenkbaren Achse zugeordneten Zeitspanne, d.h. $\delta_v(t- t_n)$ und der Veränderung des Gierwinkels des Fahrzeugs in dieser Zeitspanne ermittelt wird, und zwar nach der Formel

$$\delta_{hn}(t) = \delta_v(t- t_n) - \Psi(t) + \Psi(t- t_n) \qquad\qquad (2),$$

- der errechnete Lenkwinkel der betreffenden weiteren lenkbaren Achse mit einem Aktuator an der weiteren lenkbaren Achse eingestellt wird.

Einzelne Ausgestaltungen der Erfindung sind Gegenstand der Unteransprüche.
Die Erfindung geht von einem Fahrzeug aus, das eine lenkbare Vorderachse, die beispielsweise vom Fahrer oder bei autonomen Systemen automatisch gelenkt wird, und mindestens eine weitere lenkbare Achse aufweist, bei der es sich typischerweise um eine Hinterachse handelt, wobei diese weitere lenkbare Achse zeitverzögert zur lenkbaren Vorderachse automatisch gelenkt wird.

Neben der zeitverzögerten Änderung des Lenkwinkels jeder weiteren lenkbaren Achse gegenüber der gelenkten Vorderachse berücksichtigt das erfindungsgemäße Verfahren auch die sich innerhalb der jeweiligen Zeitspanne ergebende Gierwinkelveränderung des Fahrzeugs gegenüber der Erde oder allgemein gegenüber dem Untergrund. Durch diese Maßnahme ist es erfindungsgemäß möglich, dass beispielsweise die lenkbare Hinterachse eines zweispurigen Fahrzeugs so gelenkt werden kann, dass die Hinterräder der von den gelenkten Vorderrädern gezogenen Spuren folgen.

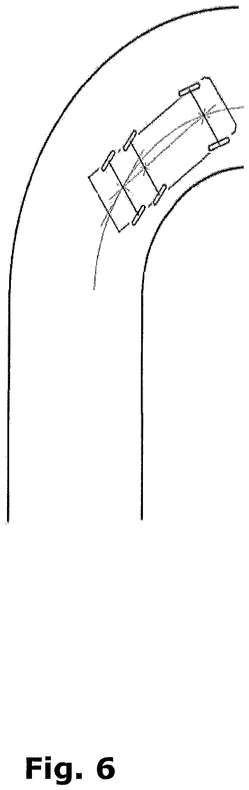

Das erfindungsgemäße Verfahren lässt sich insbesondere bei zweiachsigen zweispurigen Fahrzeugen realisieren. Weist ein Fahrzeug neben der lenkbaren Vorderachse mehrere weitere lenkbare Achsen, insbesondere Hinterachsen auf, wobei der Abstand zwischen jeweils benachbarten Achsen dieser weiteren lenkbaren Achsen kleiner als zwei Meter ist, so können die Ermittlungen der Lenkwinkel der weiteren lenkbaren Achsen um eine Korrektur-Rechnung erweitert werden, die berücksichtigt, dass die Achs-Mittelpunkte aller Achsen des Fahrzeugs auf einer geraden Linie, nämlich der Fahrzeug-Längsachse, liegen und nicht auf der in Kurven gekrümmten Mittellinie der Spur (siehe z. B. Fig. 6), wobei der Lenkwinkel der in Fahrtrichtung letzten weiteren lenkbaren Achse des Fahrzeugs nach den Formeln gemäß Anspruch 1 ohne Korrekturfaktor und die Lenkwinkel sämtlicher anderer weiterer lenkbarer Achsen, die vor der letzten weiteren lenkbaren Achse angeordnet sind, mit Korrekturfaktoren nach der Formel

$$\delta_{hn-m}(t) = \delta_v(t - t_{n-m}) - \Psi(t) + \Psi(t - t_{n-m}) + \frac{k_m}{v(t)} * \frac{d\psi(t)}{dt} \qquad (3)$$

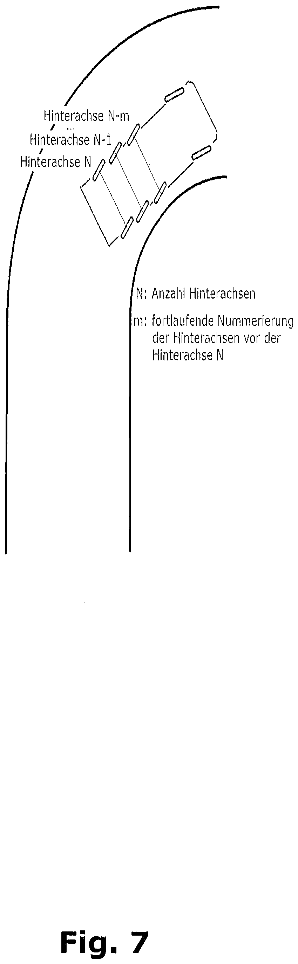

bestimmt werden (siehe hinsichtlich der Achsnummerierung Fig. 7).

Bei einer alternativen Ausgestaltung der Erfindung kann vorgesehen sein, dass bei Fahrzeugen mit zwei oder mehr weiteren lenkbaren Achsen mit einem Achsabstand zwischen jeweils benachbarten weiteren lenkbaren Achsen insbesondere von kleiner als zwei Metern berücksichtigt wird, dass die Achs-Mittelpunkte aller Achsen des Fahrzeugs auf einer geraden Linie, nämlich der Fahrzeug-Längsachse, liegen und nicht auf der in Kurven gekrümmten Mittellinie der Spur, wobei eine lenkbare Vorderachse und eine der weiteren lenkbaren Achsen die gekrümmte Mittellinie der Spur definieren und sämtliche andere weiteren lenkbaren Achsen seitlich versetzt werden, bis ihr jeweiliger Achs-Mittelpunkt mit der gekrümmten Mittellinie der Spur fluchtet. Der seitliche Achsversatz bzw. das seitliche Verschieben der Achsen macht es nun möglich, dass sämtliche weiteren lenkbaren Achsen automatisch so gelenkt werden, wie es gemäß Anspruch 1 vorgesehen ist.

Weiterhin kann alternativ zu den vorher beschriebenen Weiterbildungen der Erfindung in derartigen Fällen auch dergestalt verfahren werden, dass eine "gedachte" Mittelachse als mittlere weitere lenkbare Achse fingiert wird und dass die weiteren lenkbaren Achsen zeitgleich gelenkt werden, und zwar unter der Annahme, dass ihr Abstand zur lenkbaren Vorderachse gleich dem Abstand der fingierten mittleren weiteren lenkbaren Achse ist, wobei diese mittlere Achse am Ort des geometrischen Mittels sämtlicher weiterer lenkbarer Achsen positioniert ist, deren Achsabstand kleiner als zwei Meter ist.

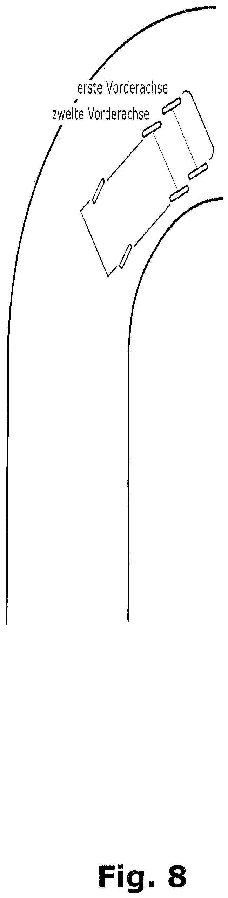

In weiterer zweckmäßiger Ausgestaltung der Erfindung kann vorgesehen sein, dass bei Fahrzeugen mit zwei gelenkten Vorderachsen die zweite Vorderachse zeitgleich mit der ersten Vorderachse gelenkt wird und die Lenkwinkel der weiteren lenkbaren Achsen in Abhängigkeit vom Lenkwinkel der ersten Vorderachse und dem Achsabstand der jeweiligen weiteren lenkbaren Achse zur ersten Vorderachse sowie der Gierwinkelveränderung des Fahrzeugs ermittelt wird (siehe hierzu beispielswiese Fig. 8).

Alternativ zur zuvor gesagten Weiterbildung der Erfindung kann gemäß einem weiteren Aspekt der Erfindung vorgesehen sein, dass bei Fahrzeugen mit zwei gelenkten Vorderachsen die zweite Vorderachse als die erste auf die erste Vorderachse folgende weitere lenkbare Achse gelenkt wird.

In weiterer vorteilhafter Ausgestaltung der Erfindung kann vorgesehen sein, dass bei einem Gespann aus einem Zugfahrzeug und einem Einachs- oder Mehrachs-Anhänger mit lenkbaren Achsen auch der Gierwinkel des Anhängers relativ zur Erde über die Zeit erfasst und gespeichert wird und zur Berechnung des Lenkwinkels der Achsen des Anhängers der Messwert des Gierwinkels des Anhängers als Parameter $\Psi(t)$ in den Formeln nach Anspruch 1 eingesetzt wird, und zwar wie folgt:

$$\delta_{hn}(t) = \delta_v(t - t_n) - \psi_A(t) + \psi_Z(t - t_n) \qquad (4),$$

mit $\Psi_A(t)$ als Gierwinkel des Ahängers und $\Psi_Z(t - t_n)$ als Gierwinkel des Zugfahrzeugs nach Ablauf der Zeitspanne, die der Hinterachse des Zugfahrzeugs bezüglich dessen gelenkter Vorderachse zugeordnet ist (siehe hierzu die Beschreibung weiter unten).

In weiterer vorteilhafter Ausgestaltung der Erfindung kann vorgesehen sein, dass die Gierwinkel mit einem Drehraten- oder INS-Messsystem und durch Integration bzw. Aufsummierung von Drehraten ermittelt werden, indem die Gierwinkeländerung in der Zeitspanne mit einem Drehraten- oder INS-Messsystem durch Aufsummierung/Integration von Messwerten ermittelt wird.

Ferner kann es zweckmäßig sein, dass die Gierwinkel mit einem GNSS-Messsystem oder in Kombination von INS-System und GNSS-System ermittelt werden.

Die Erfindung wird nachfolgend anhand der Zeichnung weiter erläutert. Im Einzelnen zeigen dabei:

Fig. 1: eine Darstellung und Definition der Lenkwinkel und des Gierwinkels,

Fig. 2: eine schematische Darstellung für eine Geradeausfahrt,

Fig. 3: eine schematische Darstellung für den Beginn einer Kurvenfahrt,

Fig. 4: eine schematische Darstellung für Kurvenfahrt, Achsmittelpunkte und Spurlinie,

Fig. 5: eine schematische Darstellung für das Ende einer Kurvenfahrt,

Fig. 6: eine schematische Darstellung für den Spurfehler bei mehreren Hinterachsen,

Fig. 7: die Nummerierung der Hinterachsen und

Fig. 8: eine schematische Darstellung eines Fahrzeugs mit zwei Vorderachsen.

Die Erfindung macht sich ein elektronisches Spurführungssystem zunutze, das die Räder einer oder mehrerer gelenkter Hinterachsen als ein Beispiel für die Positionierung der einen oder mehreren weiteren erfindungsgemäß lenkbaren Achsen eines Zweispurfahrzeuges der Fahrspur der Räder der Vorderachse derart nachführt, dass die Räder der gelenkten Hinterachse(n) genau der Fahrspur der Räder der Vorderachse folgen,

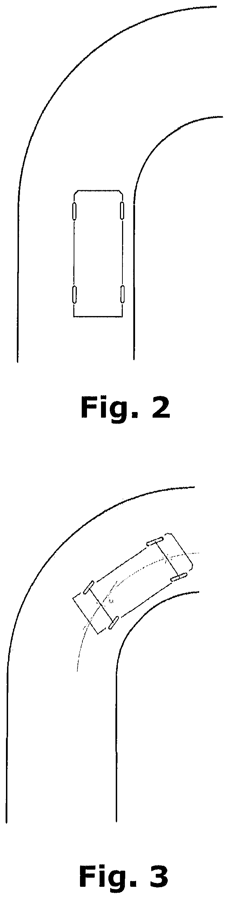

- wobei das Spurführsystem die Räder der Hinterachse so lenkt, dass diese an jedem Punkt der Straße zeitversetzt genau in die Rollrichtung relativ zur Straße gelenkt werden, in die zuvor die Vorderräder an genau diesem Straßenpunkt gelenkt worden waren,
- so dass nach dem Einlenken der Räder der Vorderachse in eine Kurve nach Geradeausfahrt des Fahrzeugs die Räder der Hinterachse vom Spurführsystem zunächst bezogen auf die Längsachse des Fahrzeugs immer mehr in zur Kurvenrichtung entgegengesetzter Richtung gelenkt werden, um relativ zur Straße bis zu dem Punkt der Straße weiter geradeaus zu rollen an dem zuvor die Räder der Vorderachse in die Kurve gelenkt wurden, woraufhin die Räder der Hinterachsen dann unter Beibehaltung ihrer Einlenkung der Fahrspur der Vorderräder folgen. (siehe Figuren 2, 3, 4, 5).

Durch das erfindungsgemäße Konzept wird erreicht, dass der Mittelpunkt der lenkbaren Hinterachse des Fahrzeugs derjenigen Linie folgt, die der Mittelpunkt der lenkbaren Vorderachse des Fahrzeugs während der Fahrt beschreibt. Damit einher geht die Tatsache, dass die Hinterräder im Wesentlichen den von den Vorderrädern "gezogenen" Spuren folgen. Somit wird das Ausmaß des Schneidens von Kurven ganz erheblich reduziert. Das Kurvenverhalten des erfindungsgemäß gelenkten Fahrzeugs entspricht im Wesentlichen demjenigen eines Fahrzeugs mit Knicklenkung.

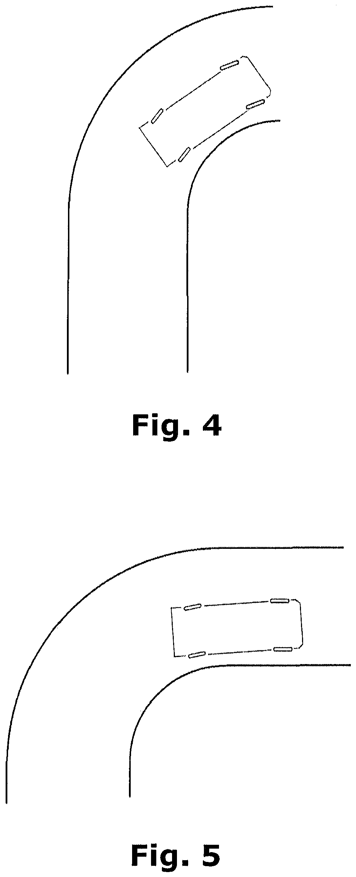

In Fig. 4 ist die Spurlinie zu sehen, die von der Mitte der Vorderachse auf der Straße vorgegeben wird und der die Mitte der Hinterachse (M) folgt.

In Fig. 4 ist zusätzlich die Tangente an der Spurlinie im Schnittpunkt mit der Achse bzw. deren Mittelpunkt M eingezeichnet. Die Laufrichtung der Räder entspricht der Tangente.

Nach dem Verfahren wird vom Spurführsystem kontinuierlich

- der Lenkwinkel der Vorderachse $\delta_v(t)$ über die Zeit erfasst und gespeichert,
- der sich während der Fahrt ändernde Gierwinkel $\Psi(t)$ des Fahrzeugs relativ zur Erde über die Zeit erfasst und gespeichert,
- die Fahrzeuggeschwindigkeit $v(t)$ erfasst und aus dieser und den Achsabständen $l_n$ der N Hinterachsen zur Vorderachse die Zeitspanne $t_n$ für jede der N Hinterachsen errechnet wird, nach der Formel

$$t_n = l_n/v(t) \tag{1}$$

und

- für jede der N Hinterachsen die Veränderung des Gierwinkels des Fahrzeugs in der Zeitspanne $t_n$, d.h. Veränderung des Gierwinkels ermittelt und
- der Lenkwinkel jeder der N Hinterachsen kontinuierlich aus dem Lenkwinkel der Vorderachse nach Ablauf der Zeitspanne $t_n$, d.h. $\delta_v(t- t_n)$ und der Veränderung des Gierwinkels des Fahrzeugs in der Zeitspanne ermittelt, nach der Formel

$$\delta_{hn}(t) = \delta_v(t- t_n) - \Psi(t) + \Psi(t- t_n) \tag{2}$$

und

- der errechnete Lenkwinkel der n-ten Hinterachse mit einem Aktuator an der Hinterachs-Lenkung der n-ten Hinterachse eingestellt.

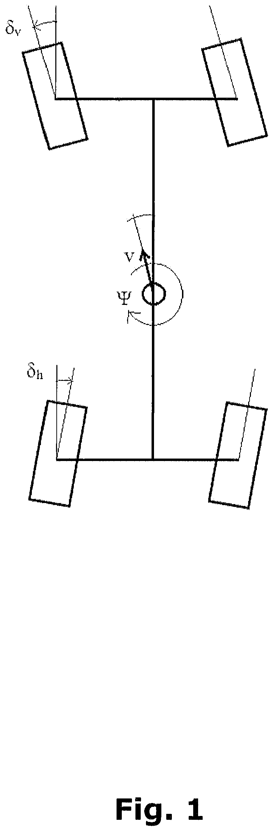

Alle in Formel (2) verwendeten und in der Fig. 1 dargestellten Winkel nehmen zu bzw. werden positiv gezählt im Uhrzeigersinn.

Die Zeitspanne $t_n$ in Formel (1) ist die Zeit, die vergeht vom Überfahren eines Straßenpunktes mit der Vorderachse des Fahrzeugs bis zum Überfahren desselben Straßenpunktes mit der gelenkten Hinterachse. Sie wird für jede der N Hinterachsen ermittelt aus der Fahrgeschwindigkeit und dem Achsabstand $l_n$ von der Vorderachse bis zur betreffenden Hinterachse. Der Vorderachs- Lenkwinkel $\delta_v(t)$ und der Gierwinkel des Fahrzeugs $\Psi(t)$ werden kontinuierlich gemessen und die Messwerte werden in einem Speicher abgelegt, sodass sie auch zu einem späteren Zeitpunkt $t- t_n$ noch zur Berechnung des/der Hinterachs-Lenkwinkel $\delta_{hn}(t)$ nach Formel (3) zur Verfügung stehen.

Bei dem elektronischen Spurführungssystem nach der Erfindung bzw. nach dem Verfahren nach der Erfindung kann ferner vorgesehen sein, dass bei Fahrzeugen mit zwei oder mehr Hinterachsen mit einem Achsabstand unter zwei Metern die Ermittlungen der Hinterachs-Lenkwinkel $\delta_h(t)$ um eine Korrektur-Rechnung erweitert werden, die berücksichtigt, dass die Achs- Mittelpunkte aller Achsen des Fahrzeugs auf einer geraden Linie, der Fahrzeug-Längsachse liegen und nicht auf der in Kurven gekrümmten Mittellinie der Spur (Siehe Fig. 6).

In Fig. 7 ist die Nummerierung der Hinterachsen dargestellt.

$$\delta_{hn-m}(t) = \delta_v(t- t_{n-m}) - \Psi(t) + \Psi(t- t_{n-m}) + \frac{k_{n-m}}{v(t)} * \frac{d\psi(t)}{dt} \tag{3}$$

Da der Mittelpunkt der letzten Hinterachse N des Fahrzeugs zur Spurführung auf der Mittellinie der Spur liegen soll (siehe Fig. 6), wird der Lenkwinkel der letzten Achse des Fahrzeugs $\delta_{hn}(t)$ nach der Formel (1) ohne Korrekturfaktor ermittelt.

Bei der Ermittlung des Lenkwinkels der Hinterachse(n) vor der letzten Achse nach Formel (3) führt der Korrekturfaktor $\frac{k_{n-m}}{v(t)} * \frac{d\psi(t)}{dt}$ beispielsweise in Rechts-kurven dazu, dass die Räder der Hinterachse(n-m) zunächst weniger nach links gelenkt werden und deshalb einer Spur rechts versetzt zur Mitte der Fahrspur folgen, wie in Fig. 6 dargestellt ist.

Die Konstante $k_{n-m}$ in Formel (3) ist für jede Hinterachse unterschiedlich. Der Korrekturfaktor $\frac{k_{n-m}}{v(t)} * \frac{d\psi(t)}{dt}$ in Formel (3) entspricht $\frac{k_{n-m}}{R(t)}$, wobei R(t) der momen-tan gefahrene Kurvenradius ist. Der Korrekturfaktor wird also kleiner mit zunehmendem Kurvenradius.

Anhand der schematischen Darstellung der Fig. 7 erkennt man, dass bei seitlich verschiebbaren lenkbaren Hinterachsen und bei Bestimmung der Kurvenspur durch die (erste) lenkbare Vorderachse und die lenkbare Hinterachse N die Hinterachse N-1 und die Hinterachse N-m oder, wenn mehr als drei Hinterachsen lenkbar sind, die Hinterachsen N-1 bis N-m seitlich nach links (bezogen auf die Fahrtrichtung und die gefahrene Rechtskurve) verschoben werden müssten, bis ihre jeweiligen Achs-Mittelpunkte auf der Kurvenspur-Mittellinie liegen bzw. mit dieser fluchten, um in diesen Verschiebepositionen ohne Berücksichtigung des Korrekturfaktors so gelenkt werden zu können, dass die Hinterräder aller Hinterachsen der Spur der Vorderräder folgen. Würde die Kurvenspur z. B. durch die lenkbare Vorderachse und die in Fahrtrichtung erste lenkbare Hinterachse N-m definiert, müssten die anderen lenkbaren Hinterachsen nach rechts (bezogen auf die Fahrtrichtung und bei einer Rechtskurve) verschoben werden, bis ihre Achs-Mittelpunkte auf der Kurvenspur-Mittellinie liegen und es damit wieder ohne Berücksichtigung von Korrekturfaktoren möglich ist, dass die Räder aller lenkbaren Hinterachsen der Spur der Räder der Vorderachse folgen. Analog ist die Situation bei einer gefahrenen Linkskurve und in all den Fällen, in denen sich vor und/oder zwischen denjenigen lenkbaren Achsen, die die Kurvenspur vorgeben, seitlich verschiebbare lenkbare Achsen befinden.

Bei dem elektronischen Spurführungssystem nach der Erfindung bzw. nach dem Verfahren kann ferner vorgesehen sein, dass bei zwei vom Fahrer bzw. autonom gelenkten vorderen Achsen die zweite Vorderachse nach bereits bekannten Methoden zusammen mit der ersten Vorderachse gelenkt wird und die Lenkwinkel der N-Hinterachsen in Abhängigkeit vom Lenkwinkel der ersten Vorderachse und dem Achsabstand $l_n$ der jeweiligen Hinterachse zur ersten Vorderachse ermittelt werden (Fig. 8).

Bei dem elektronischen Spurführungssystem nach der Erfindung kann ferner vorgesehen sein, dass bei zwei vom Fahrer bzw. autonom gelenkten vorderen Achsen die zweite Vorderachse so nach Anspruch 1 gelenkt wird, als wäre sie die erste Hinterachse (Fig. 8).

Bei dem elektronischen Spurführungssystem nach der Erfindung ist es ferner zweckmäßig, eine, mehrere oder alle gelenkten Achsen eines oder mehrerer Anhänger eines Gespanns so zu lenken, dass diese der Spur der ersten, vom Fahrer oder autonom gelenkten Achse oder Achsen des Zugfahrzeuges auf der Fahrbahn genau folgen. Dazu wird auch der Gierwinkel des oder der Anhänger $\Psi_A(t)$ über die Zeit gemessen und als Parameter $\Psi(t)$ in die Formel nach Anspruch 1 eingesetzt.

$$\delta_{hn}(t) = \delta_v(t - t_n) - \psi_A(t) + \psi_Z(t - t_n) \tag{4}$$

Zur Ermittlung des Gierwinkels des Fahrzeugs bzw. der Anhänger kann beispielsweise ein INS-System verwendet werden, bei dem die Gierwinkel mit einem Drehraten/INS-Messsystem und Integration/ Aufsummierung von Drehraten-Messwerten ermittelt werden. Da in der Formel (2) der eine Gierwinkel $\Psi(t)$ vom anderen Gierwinkel $\Psi(t - t_n)$ subtrahiert wird, und da beide Messwerte mit derselben Messvorrichtung, jedoch zu unterschiedlichen Zeitpunkten gemessen wurden, wird in Formel (2) eine mögliche Drift der Messwerte, die bei Integration über einen längeren Zeitraum entstehen kann, heraussubtrahiert.

Zur Erkennung des Gierwinkels des Fahrzeugs bzw. des oder der Anhänger/s mittels GNSS (und ggf. INS) kann ferner vorgesehen sein, die Gierwinkel mit einem GNSS-Messsystem u.U. auch in Kombination mit einem INS-System zu ermitteln.

In weiterer zweckmäßiger Ausgestaltung des elektronischen Spurführungs-systems nach der Erfindung bzw. des Verfahrens nach der Erfindung kann vorgesehen sein, dass die Gierwinkel zusätzlich oder ausschließlich mit Lidar, Kamera und/oder Radar-Messungen ermittelt werden.

Das Problem der Verengung der Gegenfahrbahn durch die der Vorderachse des Fahrzeugs starr und ungelenkt folgende Hinterachse wie auch das Problem der Gefährdung durch langen Fahrzeug-Überhang hinten lassen sich beide durch ein Spurführungssystem abmildern, das bei dem durch Anwendung der hier beschriebenen Methode des erfindungsgemäßen Verfahrens gewährleistet ist, dass die Räder der Hinterachse der Spur der Räder der Vorderachse möglichst genau folgen. Das gesamte Fahrzeug bleibt auf der Straße auf seiner Spur und lange Überhänge hinten lassen sich konstruktiv vermeiden, weil sie bezüglich Spurführung keine Vorteile mehr bieten.

Busse und Lkw

Nicht nur Busse, sondern auch lange Lkw können bei der Durchfahrt durch enge Kurven dem Gegenverkehr ein Stück der Spur in der Breite abschneiden. Der Einsatz eines Spurführungssystems für die Hinterräder wie oben für Busse beschrieben, würde grundsätzlich für alle Lkw die oben genannten Vorteile bringen.

Lkw mit Anhänger

In engen Kurven schneidet bereits die Hinterachse des Lkw die Kurve. Die Vorderachse des Anhängers folgt knapp der Hinterachs-Spur des Lkw. Die Hinterachse des Anhängers schneidet aber die Kurve noch mehr als die Hinterachse des Lkw. Würde man die Hinterachse des Lkw, sowie Vorder- und Hinterachse des Anhängers mechanisch lenkbar und elektronisch steuerbar gestalten und würde man das gesamte Gespann mit einem elektronischen Spurführungssystem wie oben für Busse beschrieben ausrüsten, so ausgeführt, dass alle Achsen des Gespanns der Spur der Vorderachse des Zugfahrzeugs folgen, so würde das Gespann die Kurve nicht mehr schneiden.

Für Lkw mit Anhänger wäre demnach ein Spurführungssystem vorteilhaft, das alle der Vorderachse folgenden Achsen so lenkt, dass diese der Spur der Vorderachse des Zugfahrzeugs folgen.

Bei langen Spezialfahrzeugen, die mit vielen Hinterachsen ausgestattet sind, z.B. Schwertransportern, sind lenkbare Achsen (elektrisch, mechanisch, hydraulisch) bereits vorgesehen. Auch Spezialfahrzeuge mit vielen Achsen ließen sich mit dem oben beschriebenen elektronischen Spurführungssystem ausrüsten, das alle der Vorderachse folgenden Achsen so lenkt, dass alle Achsen hinter der Vorderachse der Spur der Vorderachse folgen.

Pkw

Bei Pkw treten aufgrund der geringeren Länge die Probleme des Kurve-Schneidens durch die Hinterachse deutlich abgemildert auf. Auch die Anhänger für Pkw sind mit einer Achse oder mit zwei nahe beieinander montierten Achsen so konstruiert, dass der Gegenverkehr durch das Gespann in engen Kurven möglichst wenig beeinträchtigt wird. Es gibt aber auch beim Pkw Fahrsituationen, in denen ein Spurführungssystem wie oben beschrieben sinnvoll sein kann. Pkw mit Hinterachslenkung sind bereits auf dem Markt verfügbar. Bei den verfügbaren Systemen wird die Hinterachse in Abhängigkeit von der Fahrgeschwindigkeit und dem Lenkwinkel an der Vorderachse gelenkt.

Bisher ist aber kein System bekannt, das die Hinterachse so lenkt, dass die Hinterachse der Spur der Vorderachse genau folgt. Das kann Vorteile z.B. bei der Fahrt in Parkhäusern bringen.

Längere Fahrzeuggespanne

Die Fahrzeugentwicklung tendiert zu längeren Fahrzeuggespannen, um deren Nutzwert zu vergrößern. Beispiele sind Road Trains und Gespanne mit zwei Anhängern.

Mithilfe des in dieser Anmeldung beschriebenen elektronischen Spurführungssystems ließe sich die Beweglichkeit solcher besonders langer Gespanne auf den vorhandenen Straßen deutlich verbessern, wenn alle folgenden Achsen des Gespanns der Spur der Vorderachse des Zugfahrzeugs folgen.

Verkehrsinseln und Kreisel

Um Ampeln zu vermeiden und den Verkehrsfluss zu verbessern, werden immer mehr Kreuzungen mit Ampeln durch Kreisel ersetzt. Der Radius dieser Kreisel ist vor allem in Wohngebieten oft begrenzt durch die bereits bestehende Bebauung. Lkw und Busse benötigen aber einen Mindestradius, um nicht bei der Befahrung des Kreisels dessen Mittenbebauung zu überfahren. Oft wird das Innere des Kreisels deshalb entsprechend gut überfahrbar gestaltet. Die in dieser Anmeldung beschriebene elektronische Spurführung würde es Bussen und Lkw mit und ohne Anhänger ermöglichen, Kreisel auch mit kleineren Radien ohne Überfahren der Innenseite des Kreisels zu durchfahren, da alle der Vorderachse folgenden Achsen der regulären Spur der Vorderachse durch den Kreisel folgen.

Würde man zukünftig vermehrt Lkw und Busse mit elektronisch gesteuerten mechanischen Achslenkungen ausstatten, die ein Einhalten der Spur der vorderen Achse gewährleisten, dann ließen sich zunehmend kleinere Kreisel mit kleineren Radien realisieren.

Enge Kreuzungen mit Ampeln

In Städten gibt es Gebiete, die über viele Jahre, Jahrzehnte oder sogar Jahrhunderte (Europa) gewachsen sind, in denen Straßenverläufe sehr eng sind. An Kreuzungen müssen die Fahrzeuge oft sehr enge Kurvenradien fahren. Nahe an den Kreuzungen befindet sich oft zusätzlich Infrastruktur wie Ampeln, Schaltkästen etc., die nicht beschädigt werden darf.

Große Fahrzeuge wie Lkw und Busse ließen sich durch derartige eng bebaute urbane Strukturen leichter bewegen, wenn die der vorderen Achse nachfolgenden Achsen wie oben beschrieben lenkbar und elektronisch gelenkt ausgeführt würden, sodass jede Achse des Fahrzeuges (und Anhängers) der Spur der Vorderachse folgt.

Verfahren

Ein Beispiel soll erläutern, was dazu erforderlich ist, um die lenkbare Hinterachse auf der Spur der Vorderachse nachzuführen.

Ein LKW fährt zunächst geradeaus und biegt dann rechts in eine Autobahnauffahrt ein.

Die Hinterräder sollen der Spur der Vorderräder folgen, also zunächst Geradeausfahren und dann wie die Vorderräder rechts einbiegen. Der LKW fährt konstant mit 18km/h und der Achsabstand zwischen Vorderachse und Hinterachse beträgt 6 m. Das bedeutet, dass die Hinterräder noch 6 m geradeaus fahren, nachdem die Vorderräder bereits nach rechts einlenkten.

Die 6m Distanz durchfahren die Hinterräder in 1,2s t = l/v, l=6m (Radstand), v=18km/h (Fahrgeschwindigkeit).

Sobald die Vorderräder in die Kurve gelenkt werden, beginnt das Fahrzeug mit einer Gierbewegung nach rechts und nimmt dabei die Hinterräder mit. Damit die Hinterräder noch für die Zeitspanne von 1,2s auf der Straße geradeaus fahren, kann die Hinterradlenkung nicht für 1,2s inaktiv bleiben, sondern die Gierbewegung des Fahrzeugs nach rechts muss durch eine Lenkbewegung an der Hinterachse nach links kompensiert werden (Fig. 3). Die Gierwinkel-Änderung des Fahrzeugs muss also für 1,2s durch eine entgegengesetzte Lenkwinkel-Änderung der Hinterachs-Räder kompensiert werden, damit die Hinterräder der Spur der Vorderräder folgen und noch 6m geradeaus fahren.

$$\delta h(t) = - \Psi(t)$$

Nach 1,2s sollen die Räder der Hinterachse nicht mehr geradeaus fahren (bezogen auf die Straße), sondern sie sollen der Spur der Vorderräder nach rechts folgen (Fig. 4).

In Fig. 5 ist dargestellt, wie die Räder der Hinterachse auch am Ende der Kurvenfahrt der Spur der Räder der Vorderachse folgen.

Der Fahrer orientiert sich beim Lenken des Fahrzeugs an der auf der Straße markierten Spur. Nachdem der Fahrer die Kurvenfahrt eingeleitet hat, beginnt das Fahrzeug und damit das Fahrzeugchassis eine Bewegung um die Hochachse, also eine Gierbewegung. Die Gierbewegung des Fahrzeugs ist eine Bewegung relativ zur Straße. Nach 1,2 s soll die Hinterachs-Lenkung nun auch die Kurvenfahrt einleiten.

Da der Lenkungsantrieb am Chassis montiert ist und da der Lenkwinkel sich folglich auf das Fahrzeugchassis bezieht, muss zur Spurführung der Hinterräder auf der Straße auch hier der Gierwinkel des Chassis mit einbezogen werden. Der Lenkwinkel der Räder einer Achse relativ zur Straße addiert sich aus dem Lenkwinkel relativ zum Chassis und dem Gierwinkel des Chassis relative zur Straße.

Zur Verfolgung der Spur der Vorderräder auf der Straße muss der Lenkwinkel der Hinterräder relativ zur Straße (in geodätischen Koordinaten) dem Lenkwinkel der Vorderräder relativ zur Straße vor 1,2 Sekunden entsprechen.

$$\delta h(t) + \Psi(t) = \delta v(t-1,2s) + \Psi(t-1,2s)$$

Durch Umstellung der Gleichung erhält man für den einzustellenden Lenkwinkel an der Hinterachse folgende Gleichung:

$$\delta h(t) = \delta v(t-1,2s) - \Psi(t) + \Psi(t-1,2s)$$

Die Erfassung der Gierwinkel muss in geodätischen, erdbezogenen Koordinaten erfolgen.

Realisierung des erfindungsgemäßen Verfahrens/elektronisches Spurführungssystem

Die im Folgenden beschriebenen Messungen und Berechnungen erfolgen in einer Zeitschleife mit einer festen Wiederhol-Rate von z.B. 10ms.

Gemessene und berechnete Daten werden für eine vorgegebene Zeit in einem Speicher abgelegt und zwar so, dass eine eindeutige Zuordnung von Messung und Zeitpunkt der Messung möglich ist. Der Datenspeicher sollte so groß dimensioniert werden, dass möglichst Daten auch noch nach z.B. einer Minute abrufbar sind. Daten, die älter sind als z.B. eine Minute, werden mit aktuellen Daten überschrieben

- Messung des Lenkwinkels der Räder an der vom Fahrer oder autonom gelenkten Vorderachse relativ zum Fahrzeugchassis $\delta v(t)$. Abspeichern des Messwertes
- Messung des Gierwinkels $\Psi(t)$ und Abspeichern des Messwertes

Folgende Berechnung wird für jede der n Achsen, die der vom Fahrer oder autonom gelenkten Vorderachse folgenden, n Achsen durchgeführt:
Berechnung der Zeitspanne

$$\text{Zeitspanne } t_n = l_n / v(t)$$

$l_n$ ist der Achsabstand der Achse n zur Vorderachse, Messwert $v(t)$ ist die momentane Fahrgeschwindigkeit.

Da die Fahrgeschwindigkeit nicht konstant ist, sondern sich kontinuierlich ändert, sollte die Zeitspanne tn aus z.B. alle 10ms gemessenen Werten der Fahrgeschwindigkeit errechnet werden.

- Auslesen des Lenkwinkels der Räder der Vorderachse aus dem Speicher für den Zeitpunkt t-tn, also des Lenkwinkels, der zum Zeitpunkt t-tn gemessen wurde.

$$\delta v(t-tn)$$

- Auslesen des Gierwinkels des Fahrzeugs, der zum Zeitpunkt t-tn gemessen wurde

$$\Psi(t-tn)$$

- Berechnung des an den Rädern der Hinterachse einzustellenden Lenkwinkels

$$\delta hn(t) = \delta v(t-tn) - \Psi(t) + \Psi(t-tn)$$

- Elektronische Hinterachslenkung stellt errechnete Lenkwinkel δhn(t) an den Rädern der Achsen n ein.

Die hier beschriebene Realisierung eines Spurführungssystems berücksichtigt zunächst nur die Mess-und Stellgrößen "Achslenkwinkel" und "Gierwinkel" und die Fahrgeschwindigkeit. Der Einfluss des Schwimmwinkels, der Schräglauf-winkel, sowie von Nick-Wank- und Hubbewegungen des Fahrzeugs wird hier nicht berücksichtigt. Das soll nicht ausschließen, dass in einer praktischen Realisierung nach dieser Anmeldung der Erfindung oder einer späteren Version einige dieser oder alle dieser physikalischen Größen gemessen und in die Regelung des Systems einbezogen werden.

Rutschen

Wenn bei Kurvenfahrt Schwimmwinkel und Schräglaufwinkel entstehen und zu einer Verschiebung der Spur einer geführten Achse (z.B. Hinterachse des Busses) nach rechts oder links führen, folgt die Achse nach obigem Algorithmus spätestens bei einer anschließenden Geradeausfahrt wieder genau der Spur der vom Fahrer oder autonom gelenkten Vorderachse.

Stillstand

Bei Stillstand des Fahrzeugs sollten keine Messdaten von Lenkwinkel, Gierwinkel und Fahrgeschwindigkeit während des Stillstands gespeichert werden, da diese Messwerte sich bei Stillstand nicht verändern und da unnötig Speicherplatz benötigt wird. Es ist aber sinnvoller, die Messdaten gemessen bei der Fahrt vor dem Stillstand zu erhalten, weil diese in der Anfahr-Situation des Fahrzeugs benötigt werden.
Bei der Berechnung der Zeit, die vergeht, bis eine Achse n den von der Vorderachse überfahrenen Punkt erreicht, können Stillstandsphasen ausgeklammert werden.

Rückwärtsfahrt

Das erfindungsgemäße Verfahren kann prinzipiell auch für Rückwärtsfahrten eingesetzt werden, wobei dann der Fahrer die bei Vorwärtsfahrt hintere Achse lenkt oder diese Achse autonom gelenkt wird.
Die Achslenkwinkel sollten durch redundante Ausführung der Sensorik gemessen werden. Überwachung und Unterstützung durch Radar-, Lidar- und/oder optische Systeme kann sinnvoll sein. Radar-, Lidar-und/oderoptische Systeme können auch dazu eingesetzt werden, um zu überprüfen, ob das Fahrzeug sich tatsächlich auf der vorgegebenen Spur auf der Straße befindet.

Definitionen

| | |
|---|---|
| $\Psi$ | Gierwinkel des Fahrzeugs |
| $\Psi_Z$ | Gierwinkel des Zugfahrzeugs |
| $\Psi_A$ | Gierwinkel des Anhängers |
| $\delta h$ | Lenkwinkel der Hinterräder relativ zum Fahrzeug |
| $\delta v$ | Lenkwinkel der Vorderräder relativ zum Fahrzeug |
| t | t ist der Moment jetzt, in dem Messungen erfolgen und Stellbefehle an Aktuatoren ausgegeben werden |
| (t-tn) | Zeitpunkt, an dem die Vorderachse einen Punkt auf der Straße über-fahren hat, den die Räder der n-ten Hinterachse gerade überfahren |
| tn | Zeitspanne, betrachtet von demjenigen Zeitpunkt, an dem die Vorder-achse einen Punkt auf der Straße über-fahren hat, bis zu dem Zeit-punkt, an dem die n-te Hinterachse denselben Punkt auf der Straße überfährt |
| n | fortlaufende Nummerierung der gelenkten Hinterachsen |
| N | Anzahl der weiteren lenkbaren Achsen |

n-m    Fortlaufende Nummerierung der Hinterachsen vor der letzten Hinter-achse des Fahrzeugs nach dem in Fig. 7 dargestellten Schema, mit m = 1,2,...,N-1

$k_{n-m}$    Konstante zur Berechnung des Korrekturfaktors für die (N-m)-te Hinterachse nach Formel (3)

v(t)    momentane Fahrgeschwindigkeit

R(t)    momentan gefahrener Kurvenradius

Korrekturfaktor

$$\frac{k_{n-m}}{v(t)} * \frac{d\psi(t)}{dt}$$

Vorderachse

Eine oder mehrere vom Fahrer oder autonom gelenkte Vorderachsen eines Zweispurfahrzeugs

Gelenkte Hinterachse

Eine oder mehrere der Vorderachse folgende Achsen. Die Hinterachse ist lenkbar so ausgeführt, dass der Lenkwinkel der Räder der Hinterachse relativ zum Fahrzeug vom Spurführsystem über einen Aktuator eingestellt werden kann

**Patentansprüche**

**1.**    Verfahren zur Beibehaltung der Spur eines zweispurigen Fahrzeugs mit einer lenkbaren Vorderachse und mit einer oder mehreren in unterschiedlichen Achsabständen zu der Vorderachse angeordneten weiteren lenkbaren Achsen, insbesondere Hinterachsen, wobei bei dem Verfahren kontinuierlich

- der Lenkwinkel ($\delta_v$(t)) der Vorderachse über die Zeit erfasst und gespeichert wird,
- der sich während der Fahrt ändernde Gierwinkel ($\Psi$(t)) des Fahrzeugs relativ zur Erde über die Zeit erfasst und gespeichert wird,
- die Fahrzeuggeschwindigkeit (v(t)) erfasst wird,
- für jede weitere lenkbare Achse aus der Fahrzeuggeschwindigkeit (v(t)) und dem Abstand $I_n$ der betreffenden weiteren lenkbaren Achse von der Vorderachse eine Zeitspanne ($t_n$) errechnet wird, und zwar nach der Formel

$t_n = I_n/v(t),$

für n = 1,2,…,N (Anzahl der weiteren lenkbaren Achsen),        (1),

- für jede weitere lenkbare Achse die Veränderung des Gierwinkels ($\Psi$(t)) des Fahrzeugs innerhalb der der betreffenden weiteren lenkbaren Achse zugeordneten Zeitspanne ($t_n$), ermittelt wird,
- der Lenkwinkel ($\delta_{hn}$(t)) jeder weiteren lenkbaren Achse kontinuierlich aus dem Lenkwinkel ($\delta_v$(t)) der Vorder-achse nach Ablauf der der betreffenden weiteren lenkbaren Achse zugeordneten Zeitspanne ($t_n$) und der Ver-änderung des Gierwinkels ($\Psi$(t)) des Fahrzeugs in dieser Zeitspanne ermittelt wird, und zwar nach der Formel

$\delta_{hn}(t) = \delta_v(t- t_n) - \Psi(t) + \Psi(t- t_n)$                (2),

- der errechnete Lenkwinkel ($\delta_{hn}$(t)) der betreffenden weiteren lenkbaren Achse mit einem Aktuator an der weiteren lenkbaren Achse eingestellt wird.

**2.**    Verfahren nach Anspruch 1, **dadurch gekennzeichnet, dass** bei Fahrzeugen mit zwei oder mehr weiteren lenkbaren Achsen mit einem Achsabstand zwischen jeweils benachbarten weiteren lenkbaren Achsen insbesondere von kleiner als zwei Metern die Ermittlungen der Lenkwinkel ($\delta_h$(t)) der weiteren lenkbaren Achsen um eine Korrektur-Rechnung erweitert werden, die berücksichtigt, dass die Achs-Mittelpunkte aller Achsen des Fahrzeugs auf einer geraden Linie, nämlich der Fahrzeug-Längsachse, liegen und nicht auf der in Kurven gekrümmten Mittellinie der Spur, wobei der Lenkwinkel ($\delta_{hn}$(t)) der letzten weiteren lenkbaren Achse des Fahrzeugs nach den Formeln gemäß Anspruch 1 ohne Korrekturfaktor und die Lenkwinkel sämtlicher weiterer lenkbaren Achsen vor der letzten lenkbaren Achse mit Korrekturfaktoren nach der Formel

$$\delta_{hn\text{-}m}(t) = \delta_v(t\text{-}\,t_{n\text{-}m}) - \Psi(t) + \Psi(t\text{-}\,t_{n\text{-}m}) + \frac{k_m}{v(t)} * \frac{d\psi(t)}{dt} \qquad (3)$$

bestimmt werden.

3. Verfahren nach Anspruch 1, **dadurch gekennzeichnet, dass** bei Fahrzeugen mit zwei oder mehr weiteren lenkbaren Achsen mit einem Achsabstand zwischen jeweils benachbarten weiteren lenkbaren Achsen insbesondere von kleiner als zwei Metern berücksichtigt wird, dass die Achs-Mittelpunkte aller Achsen des Fahrzeugs auf einer geraden Linie, nämlich der Fahrzeug-Längsachse, liegen und nicht auf der in Kurven gekrümmten Mittellinie der Spur, wobei eine lenkbare Vorderachse und eine der weiteren lenkbaren Achsen die gekrümmte Mittellinie der Spur definieren und sämtliche andere weiteren lenkbaren Achsen seitlich versetzt werden, bis ihr jeweiliger Achs-Mittelpunkt mit der gekrümmten Mittellinie der Spur fluchtet.

4. Verfahren nach einem der Ansprüche 1 bis 3, **dadurch gekennzeichnet, dass** bei Fahrzeugen mit zwei gelenkten Vorderachsen die zweite Vorderachse zeitgleich mit der ersten Vorderachse gelenkt wird und die Lenkwinkel der weiteren lenkbaren Achsen in Abhängigkeit vom Lenkwinkel ($\delta_{hn}$(t)) der ersten Vorderachse ($\delta_v$) und dem Achsabstand ($l_n$) der jeweiligen weiteren lenkbaren Achse zur ersten Vorderachse sowie der Veränderung des Gierwinkels ($\Psi$(t)) des Fahrzeugs ermittelt wird.

5. Verfahren nach einem der Ansprüche 1 bis 3, **dadurch gekennzeichnet, dass** bei Fahrzeugen mit zwei gelenkten Vorderachsen die zweite Vorderachse als die erste auf die erste Vorderachse folgende weitere lenkbare Achse gelenkt wird.

6. Verfahren nach einem der Ansprüche 1 bis 5, **dadurch gekennzeichnet, dass** bei einem Gespann aus einem Zugfahrzeug und einem Einachs- oder Mehrachs-Anhänger mit lenkbaren Achsen auch der Gierwinkel des Anhängers relativ zur Erde über die Zeit erfasst und gespeichert wird und zur Berechnung des Lenkwinkels $\delta_{hn}$(t) der Achsen des Anhängers der Messwert des Gierwinkels des Anhängers als Parameter $\Psi$(t) in den Formeln nach Anspruch 1 eingesetzt wird

$$\delta_{hn}(t) = \delta_v(t\text{-}\,t_n) - \psi_A(t) + \psi_Z(t\text{-}\,t_n), \qquad (4)$$

mit $\Psi_A(t)$ als Gierwinkel des Ahängers und $\Psi_Z(t\text{-}\,t_n)$ als Gierwinkel des Zugfahrzeugs nach Ablauf der Zeitspanne, die der Hinterachse des Zugfahrzeugs bezüglich dessen gelenkter Vorderachse zugeordnet ist.

7. Verfahren nach einem der Ansprüche 1 bis 6, **dadurch gekennzeichnet, dass** die Gierwinkel mit einem Drehraten- oder INS-Messsystem und durch Integration bzw. Aufsummierung von Drehraten ermittelt werden, indem die Änderung des Gierwinkels ($\Psi$(t)) in der Zeitspanne ($t_n$) mit einem Drehraten- oder INS-Messsystem durch Aufsummierung/Integration von Messwerten ermittelt wird.

8. Verfahren nach einem der Ansprüche 1 bis 7, **dadurch gekennzeichnet, dass** die Gierwinkel mit einem GNSS-Messsystem oder in Kombination von INS-System und GNSS-System ermittelt werden.

**Claims**

1. A method for maintaining the track of a two-track vehicle with a steerable front axle and with one or several further steerable axles, in particular rear axles, arranged in different axle distances to the front axle, wherein in said method the following is performed in a continuous manner:

   - the steering angle ($\delta_v$(t)) of the front axle is detected and stored over time,

- the yaw angle ($\Psi(t)$) of the vehicle relative to the earth, which changes while driving, is detected and stored over time,
- the vehicle speed ($v(t)$) is detected,
- for each further steerable axle, a time period ($t_n$) is calculated from the vehicle speed ($v(t)$) and the distance $l_n$ of the respective further steerable axle to the front axle, according to the formula

$$t_n = l_n/v(t),$$

$$\text{for } n = 1,2,\ldots,N \text{ (number of further steerable axles)} \tag{1},$$

- for each further steerable axle, the change in the yaw angle ($\Psi(t)$) of the vehicle is determined within the time period ($t_n$) assigned to the respective further steerable axle,
- the steering angle ($\delta_{hn}(t)$) of each further steerable axle is continuously determined from the steering angle ($\delta_v(t)$) of the front axle after expiry of the time period ($t_n$) assigned to the respective further steerable axle and from the change in the yaw angle ($\Psi(t)$) of the vehicle in said time period, according to the formula

$$\delta_{hn}(t) = \delta_v(t-t_n) - \Psi(t) + \Psi(t-t_n) \tag{2},$$

- the calculated steering angle ($\delta_{hn}(t)$) of the respective further steerable axle is continuously adjusted with an actuator on the further steerable axle.

2. The method according to claim 1, **characterized in that** in the case of vehicles having two or more further steerable axles with an axle distance between respectively adjacent further steerable axles of, in particular, less than two meters, the determinations of the steering angles ($\delta_h(t)$) of the further steerable axles are extended by a correction calculation which considers the fact that the axle centers of all axles of the vehicle lie on a straight line, namely the vehicle longitudinal axis, and not on the center line of the track which is curved in curves, wherein the steering angle ($\delta_{hn}(t)$) of the last further steerable axle of the vehicle is determined according to the formulae according to claim 1 without correction factor and the steering angles of all further steerable axles before the last steerable axle are determined with correction factors according to the formula

$$\delta_{hn-m}(t) = \delta_v(t - t_{n-m}) - \Psi(t) + \Psi(t - t_{tn-m}) + \frac{k\ m}{v(t)} * \frac{\delta\Psi(t)}{dt} \tag{3}$$

3. The method according to claim 1, **characterized in that** in the case of vehicles having two or more further steerable axles with an axle distance between respectively adjacent further steerable axles of, in particular, less than two meters, it is considered that the axle centers of all axles of the vehicle lie on a straight line, namely the vehicle longitudinal axis, and not on the center line of the track which is curved in curves, wherein a steerable front axle and one of the further steerable axles define the curved central line of the track, and all other further steerable axles are laterally shifted until their respective axle center is aligned with the curved central line of the track.

4. The method according to one of claims 1 to 3, **characterized in that** in the case of vehicles having two steered front axles, the second front axle is steered simultaneously with the first front axle and the steering angles of the further steerable axles are determined as a function of the steering angle ($\delta_{hn}(t)$) of the first front axle ($\delta_v$) and the axle distance ($l_n$) of the respective further steerable axle to the first front axle as well as the change in the yaw angle ($\Psi(t)$) of the vehicle.

5. The method according to one of claims 1 to 3, **characterized in that** in the case of vehicles having two steered front axles, the second front axle is steered as the first further steerable axle following the first front axle.

6. The method according to one of claims 1 to 5, **characterized in that** in the case of a combination of a towing vehicle and a single-axle or multi-axle trailer with steerable axles, the yaw angle of the trailer relative to the earth is also measured and stored over time, and, in order to calculate the steering angle $\delta_{hn}(t)$ of the axles of the trailer, the measured value of the yaw angle of the trailer is used as parameter $\Psi(t)$ in the formulae according to claim 1

$$\delta_{hn}(t) = \delta_v(t - t_n) - \Psi_A(t) + \Psi_Z(t - t_n) \qquad (4),$$

with $\Psi_A(t)$ as the yaw angle of the trailer and $\Psi_Z(t - t_n)$ as the yaw angle of the towing vehicle after expiry of the time period which is assigned to the rear axle of the towing vehicle with respect to the steered front axle of the towing vehicle.

7. The method according to one of claims 1 to 6, **characterized in that** the yaw angles are determined with a rotation rate or INS measurement system and by integration or summation of rotation rates by determining the change in the yaw angle ($\Psi(t)$) in the time period ($t_n$) with a rotation rate or INS measurement system by summation/integration of measured values.

8. The method according to one of claims 1 to 7, **characterized in that** the yaw angles are determined with a GNSS measurement system or in combination of INS system and GNSS system.

**Revendications**

1. Procédé permettant de maintenir la voie d'un véhicule à deux voies, muni d'un essieu avant orientable et d'un ou de plusieurs essieux orientables supplémentaires disposés à des distances entre essieux différentes par rapport à l'essieu avant, en particulier des essieux arrière, dans lequel, de manière continue lors du procédé

   - l'angle de direction ($\delta_v(t)$) de l'essieu avant est détecté dans le temps et mis en mémoire,
   - l'angle de lacet ($\Psi(t)$) du véhicule par rapport au sol variant pendant la marche est détecté dans le temps et mis en mémoire,
   - la vitesse du véhicule (v(t)) est détectée,
   - une plage de temps ($t_n$) est calculée pour chaque essieu orientable supplémentaire à partir de la vitesse du véhicule (v(t)) et de la distance $l_n$ entre l'essieu orientable supplémentaire concerné et l'essieu avant, à savoir selon la formule

$$t_n = l_n/v(t),$$

$$\text{pour } n = 1,2, \ldots, N \text{ (nombre des essieux orientables supplémentaires), (1),}$$

   - la variation de l'angle de lacet ($\Psi(t)$) du véhicule à l'intérieur de la plage de temps ($t_n$) associée à l'essieu orientable supplémentaire concerné est déterminée pour chaque essieu orientable supplémentaire,
   - l'angle de direction ($\delta_{hn}(t)$) de chaque essieu orientable supplémentaire est déterminé en continu à partir de l'angle de direction ($\delta_v(t)$) de l'essieu avant après écoulement de la plage de temps ($t_n$) associée à l'essieu orientable supplémentaire concerné et de la variation de l'angle de lacet ($\Psi(t)$) du véhicule à l'intérieur de cette plage de temps, à savoir selon la formule

$$\delta_{hn}(t) = \delta_v(t - t_n) - \psi(t) + \psi(t - t_n) \qquad (2),$$

   - l'angle de direction calculé ($\delta_{hn}(t)$) de l'essieu orientable supplémentaire concerné est ajusté par un actionneur au niveau de l'essieu directeur supplémentaire.

2. Procédé selon la revendication 1, **caractérisé en ce que** dans le cas de véhicules muni de deux essieux orientables supplémentaires ou plus avec une distance entre des essieux orientables supplémentaires respectivement adjacents en particulier inférieure à deux mètres les déterminations des angles de direction ($\delta_h(t)$) des essieux orientables supplémentaires sont élargies d'un calcul de correction, lequel prend en compte que les points médians de tous les essieux du véhicule sont situés sur une ligne droite, à savoir l'axe longitudinal du véhicule, et non sur la ligne médiane de la voie courbée dans les virages, dans lequel l'angle de direction ($\delta_{hn}(t)$) du dernier essieu orientable supplémentaire du véhicule est déterminé d'après les formules selon la revendication 1 sans facteur de correction et les angles de direction de tous les essieux orientables supplémentaires devant le dernier essieu orientable sont déterminés avec des facteurs de correction d'après la formule

$$\delta_{hn-m}(t) = \delta_v(t - t_{n-m}) - \psi(t) + \psi(t - t_{n-m}) + \frac{k_m}{v(t)} * \frac{d\psi(t)}{dt} \quad (3)$$

3. Procédé selon la revendication 1, **caractérisé en ce que** dans le cas de véhicules muni de deux essieux orientables supplémentaires ou plus avec une distance entre des essieux orientables supplémentaires respectivement adjacents en particulier inférieure à deux mètres il est pris en compte que les points médians axiaux de tous les essieux du véhicule sont situés sur une ligne droite, à savoir l'axe longitudinal du véhicule, et non sur la ligne médiane de la voie courbée dans les virages, dans lequel un essieu avant orientable et un des essieux orientables supplémentaires définissent la ligne médiane courbée de la voie et tous les autres essieux orientables supplémentaires sont décalés latéralement jusqu'à alignement de leur point médian d'essieu respectif avec la ligne médiane courbée de la voie.

4. Procédé selon l'une des revendications 1 à 3, **caractérisé en ce que** dans le cas de véhicules muni de deux essieux avant dirigés le deuxième essieu avant est dirigé en même temps que le premier essieu avant et l'angle de direction des essieux orientables supplémentaires est déterminé en fonction de l'angle de direction ($\delta_{hn}(t)$) du premier essieu avant ($\delta_v$) et de la distance ($l_n$) entre l'essieu orientable supplémentaire respectif par rapport au premier essieu avant ainsi que la variation de l'angle de lacet ($\Psi(t)$) du véhicule.

5. Procédé selon l'une des revendications 1 à 3, **caractérisé en ce que** dans le cas de véhicules muni de deux essieux avant dirigés le deuxième essieu avant est dirigé comme le premier essieu orientable supplémentaire suivant le premier essieu avant.

6. Procédé selon l'une des revendications 1 à 5, **caractérisé en ce que** dans le cas d'un attelage constitué d'un véhicule tracteur et d'une remorque à un essieu ou à plusieurs essieux munie d'essieux orientables l'angle de lacet de la remorque par rapport au sol est également détecté dans le temps et mis en mémoire et la valeur de mesure de l'angle de lacet de la remorque est utilisée comme paramètre $\Psi(t)$ dans la formule selon la revendication 1 afin de calculer l'angle de direction $\delta_{hn}(t)$ des essieux de la remorque

$$\delta_{hn}(t) = \delta_v(t - t_n) - \psi_A(t) + \psi_Z(t - t_n) \quad (4)$$

avec $\Psi_A(t)$ en tant qu'angle de lacet de la remorque et $\Psi_Z(t - t_n)$ en tant qu'angle de lacet du véhicule tracteur après écoulement de la plage de temps associée à l'essieu arrière du véhicule tracteur par rapport à l'essieu avant orientable de celui-ci.

7. Procédé selon l'une des revendications 1 à 6, **caractérisé en ce que** les angles de lacet sont déterminés avec un système de mesure de vitesse de rotation ou de navigation inertielle et par intégration ou totalisation des vitesses de rotation, la variation de l'angle de lacet ($\Psi(t)$) dans la plage de temps ($t_n$) étant déterminée avec un système de mesure de vitesse de rotation ou de navigation inertielle et par totalisation/intégration des valeurs de mesure.

8. Procédé selon l'une des revendications 1 à 7, **caractérisé en ce que** les angles de lacet sont déterminés avec un système de mesure GNSS ou en combinaison de système de navigation inertielle et de système GNSS.

**Fig. 1**

**Fig. 2**

**Fig. 3**

**Fig. 4**

**Fig. 5**

## Fig. 6

Hinterachse N-m
...
Hinterachse N-1
Hinterachse N

N: Anzahl Hinterachsen

m: fortlaufende Nummerierung
der Hinterachsen vor der
Hinterachse N

# Fig. 7

erste Vorderachse

zweite Vorderachse

# Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0308263 A
- DE 69005148 T
- DE 3446881 A
- US 4770265 A
- DE 102006037588 A
- DE 60319896 T